# EUROPEAN PATENT APPLICATION

(11) **EP 1 146 382 A1**
(43) Date of publication of application: **17.10.2001**
(21) Application number: 00107890.6
(22) Date of filing: 12.04.2000
(51) Int. Cl.: G02C 7/06

(54) **Lens for eyesight correction glasses**

(71) Applicant: ASAHI LITE OPTICAL CO., LTD., Fukui-shi, Fukui 910-0859 (JP)
(72) Inventor: Ono, Minoru, Fukui-shi, Fukui 910-0024 (JP)
(74) Representative: Strehl Schübel-Hopf & Partner

(57) **Abstract**

A lens for eyesight correction glasses that allows the user to see a nearby viewing object in a naked eye state is provided.

An upper portion A of a lens to be mounted on glasses that is made an eyesight correction portion for far-viewing and its lower portion B that is made a portion for near-viewing that has no eyesight correction ability or has small eyesight correction ability are integrated with each other. The eyesight correction portion for far-viewing corrects farsightedness, nearsightedness, astigmatism, etc. The lower portion having no eyesight correction ability includes no correction diopter and provides the same effect as viewing with the naked eye. The reason why this portion is used to perform small eyesight correction is to minimize an undue load on the ciliary muscles in view of the facts that the effectuation of "adjustment" that is a function of stressing the ciliary muscles to increase the thickness of the crystalline lenses to thereby increase the refractive power varies from one person to another and that there are persons with astigmatism. It is preferable that the correction ability be as small as 0.00-1.00 diopter. In particular, the lens for eyesight correction glasses contributes to acceleration of natural recovery of infants from temporary nearsightedness.

## Description

### Technical Field

The present invention relates to a lens for eyesight correction glasses.

### Background of the Invention

Lenses for eyesight correction glasses are classified into lenses for the farsighted, lenses for the nearsighted, lenses for persons with astigmatism, lenses for persons with farsightedness due to old age, etc. Whereas lenses of those types may be incorporated in glasses individually, there exist a double focus lens and a progressive multi-focus lens that incorporate a lens for a person with farsightedness due to old age in a near-viewing portion. This position is favorable in clearly viewing an object at hand because in such a case the user turns his eyes downward. In contrast, a lens that integrally incorporates a lens for a person with farsightedness due to old age in a far-viewing portion is employed for a case where the user needs to view an object with his eyes turned upward, an example of which case is such that the pilot in the pilot's seat of an airplane manipulates instruments. This is a special case in which a lens for a person with farsightedness due to old age is also needed in a near-viewing portion because instruments are provided above and below the pilot's seat. In glasses for the above purposes, a basic correction lens is integrated with a lens for a person with farsightedness due to old age. As exemplified above, it is common to use a lens for glasses in which a single correction lens integrally incorporates a lens having a different property from the former. On the other hand, there frequently occur cases where school students consult with opticians because they have difficulty viewing characters on the blackboard during a class. This is called temporary (or false) nearsightedness and is caused by long-hour studying or enjoying video games or a personal computer for a long time. Opticians recommend a lens suitable for the degree of nearsightedness. However, this type of nearsightedness is one caused by external factors in eyes that were normal in themselves and, in addition, children in their period of growth have sufficient ability to recover. Therefore, it is better to avoid eyesight correction for a portion that can be seen with the naked eye.

In general, persons can clearly view far and near objects when they are young. This is because their eyes focus on the object in accordance with its distance. Persons having good sight clearly see a distant object in a natural state. In looking at a nearby object, focusing is performed in such a manner that the ciliary muscles are strained to make the crystalline lenses thicker, to thereby increase the refractive power. Increasing the refractive power by making the crystalline lenses thicker is called "adjustment," and a state that the ciliary muscles are relaxed and the crystalline lenses have their natural thickness is called an "unadjusted state." When the crystalline lenses have become hard with age, even if the ciliary muscles are stressed in any degree the crystalline lenses do not bulge and hence do not increase in thickness, becoming incapable of focusing on a nearby object. This state is called farsightedness due to old age. Even with farsightedness, young persons can clearly see both distant and nearby objects through adjustment if the degree of farsightedness is low. However, they tend to be tired because the ciliary muscles need to be strained all the time. There are persons with a high degree of farsightedness who cannot clearly see distant nor nearby objects. This is a case where the adjustment is insufficient. In contrast, although persons with nearsightedness cannot clearly see distant objects, they can clearly see objects that are closer to them than a certain position. In the case of children, the above-mentioned "adjustment" takes effect very easily. And there may occur a case that due to excessive work on nearby objects adjustment remains effective even in an ordinary state. In this case, even a person with good sight or farsightedness may be judged nearsighted when only a simple test is made. This is called temporary (or false) nearsightedness. In particular, infants have great adjustment ability. It is not rare that junior high school students and children younger than those are judged nearsighted when an ordinary test is performed even though they actually have good sight or far sight. To judge whether a person is in temporary nearsightedness or in true nearsightedness, static refractive power is measured by dropping an adjustment-disabling anesthetic. The present invention proposes a lens for glasses that is useful for relaxing an over-adjusted state.

### Summary of the Invention

The present invention provides a lens for eyesight correction glasses that allows the user to see a nearby viewing object in a naked eye state.

An upper portion of a lens to be mounted on glasses is made an eyesight correction portion for far-viewing and its lower portion is made a portion for near-viewing that has no eyesight correction ability or has small eyesight correction ability. The eyesight correction portion for far-viewing corrects farsightedness, nearsightedness, astigmatism, etc. The lower portion having no eyesight correction ability includes no correction diopter and provides the same effect as viewing with the naked eye. The reason why this portion is used to perform small eyesight correction is to minimize an undue load on the ciliary muscles in view of the facts that the effectuation of the above-mentioned "adjustment" varies from one person to another and that there are persons with astigmatism.

The eyesight correction portion for far-viewing is made a minus lens for nearsightedness correction and the lower portion is made a portion for near-viewing that has no eyesight correction ability or has small eyesight correction ability. This configuration is particularly intended for correction of temporary nearsightedness of an infant. Correction is made in such a degree as to cause no particular problems in a far-viewing range that is a classroom or a home. It is preferable that the portion for near-viewing includes as small a correction diopter as possible. However, since a large leap in diopter may render the user in danger such as cause him to fall down or collide with some object, a certain degree of correction is made.

The boundary between the far-viewing portion and the near-viewing portion is given a gently curved surface to avoid a leap in diopter there. The gently curved surface includes an aspherical surface. However, it is preferable that the lens be so configured that the near-viewing portion is not strongly influenced by the correction diopter of the far-viewing portion and that when the lens is mounted on glasses the near-viewing portion occupies about 30 to 40% of the total area.

### Brief Description of the Drawings

[Fig. 1] A vertical sectional view of a lens for glasses according to the present invention.

[Fig. 2] A vertical sectional view of a lens for glasses showing another embodiment of the invention.
1,1a: Lens for glasses
2: Thin lens
3: Spherical transparent body

### Mode for Carrying Out the Invention

Embodiments of the present invention will be hereinafter described with reference to the drawings.

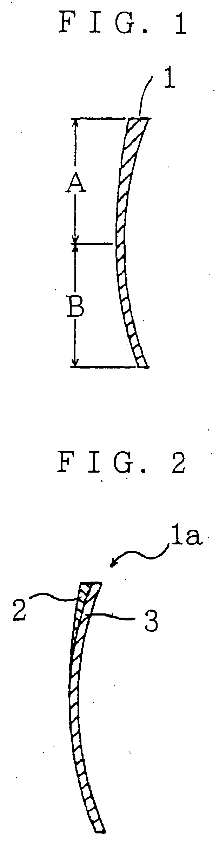

Fig. 1 is a sectional view taken perpendicularly to the optical axis of a lens 1 for eyesight correction glasses. The lens 1 is configured in such a manner that an upper portion A and a lower portion B are integrated with each other. The upper portion A is a minus lens in which the eye-side radius of curvature is shorter than the object-side one. The lower portion B is a portion having a constant thickness t and hence having no prism effect. Where a student wears glasses mounted with such lenses, he sees, for example, the blackboard during a class in a classroom through the upper portion A capable of eyesight correction. He sees a textbook or a notebook on the desk through the lower portion B having no eyesight correction ability. This is equivalent to viewing with the naked eye and hence no load is imposed on his eyes. They say that essentially it is preferable that the temporary nearsightedness of children in their period of growth be cured by their natural ability to recover. However, if the temporary nearsightedness causes difficulty doing school life etc., the child concerned would feel burdensome. In this connection, to avoid undue eyesight correction, the lens of the invention is very useful. The purpose of the upper portion A, that is, the eyesight correction portion, is not limited to nearsightedness correction and can be farsightedness correction and astigmatism correction. It may be necessary to impart small eyesight correction ability to the near-viewing portion. Persons are not uniform in the degree of effectuation of the above-mentioned "adjustment" and may have latent, hereditary factors relating to astigmatism, farsightedness, nearsightedness, etc. In such cases, it is sound to give a certain correction diopter. Since the invention is intended for persons still having ability to restore good sight, employment of a smaller correction diopter is proper; it is preferable that the correction diopter be as small as 0.00-1.00 diopter.

The above-described lens is divided at the boundary between the far-viewing portion and the near-viewing portion. The lens should be designed so as to connect the two portions smoothly at the boundary by using a gently curved surface to thereby avoid a leap in diopter there. Usually, a designing method similar to the one used for a progressive multi-focus lens is used. A sense of incongruity can be avoided more thoroughly by employing an aspherical shape. However, it is preferable that the lens be so configured that the near-viewing portion is not strongly influenced by the correction diopter of the far-viewing portion and that when the lens is mounted on glasses the near-viewing portion occupies about 30-40% of the total area.

Although the lens for glasses according to the invention may be made of either glass or plastics, the use of lightweight plastics is preferable for children. The lens may be either formed as a complete product lens or formed as a semi-product lens and then polished in accordance with an order. The polishing surface may be either the object-side surface or the eye-side surface; it is preferable that the polishing surface be a surface that is easier to polish. The surface opposite to the polishing surface is made a precision forming surface.

Referring to Fig. 2, another example in which the far-viewing portion and the near-viewing portion of a lens are not necessarily formed integrally from the start. A spherical transparent body 3 is formed in advance that has no correction diopter and has a constant thickness t and a prescribed curvature. A thin lens 2 that is so designed as to have a diopter that is necessary for correction is formed separately for an upper portion and then integrated with the object-side surface of the transparent spherical body by bonding, whereby a lens 1a for eyesight correction glasses is formed. The thin lens 2 that is so designed as to have a diopter that is necessary for correction is flexible and cannot secure a curved surface by itself; it is so designed as to form a spherical surface and provides a desired correction diopter when bonded. Therefore, it is advantageous to set the radius of curvature of the above-mentioned spherical transparent body 3 as large as possible. The above-mentioned thin lens 2 may be stuck to either the object-side surface or the eye-side surface of the spherical transparent body.

### Advantages of the Invention

With the lens for eyesight correction glasses according to the invention, particularly a child in his period of growth views an object through a correction lens only in a necessary direction when he comes to be in temporary nearsightedness. Since he can see an object at hand with the naked eye or through a portion for an extremely small correction, the lens has an advantage of helping natural recovery from nearsightedness. The lens according to the invention in which the far-viewing portion and the near-viewing portion are integrated with each other can be used for not only a nearsighted person but also a farsighted person and a person with astigmatism.

## Claims

1. A lens for eyesight correction glasses which is configured in such a manner that an upper portion of a lens to be mounted on glasses is made an eyesight correction portion for far-viewing and its lower portion is made a portion for near-viewing that has no eyesight correction ability or has small eyesight correction ability.

2. The lens for eyesight correction glasses according to claim 1, **characterized in that** the eyesight correction portion mentioned in claim 1 is a minus lens for nearsightedness correction.

3. The lens for eyesight correction glasses according to claim 1 or 2, wherein a boundary between the far-viewing portion and the near-viewing portion has a gently curved surface to avoid a leap in diopter there.
